# EUROPEAN PATENT SPECIFICATION

(11) **EP 3 880 507 B1**
(45) Date of publication and mention of the grant of the patent: **07.06.2023**
(21) Application number: 19801374.0
(22) Date of filing: 15.11.2019
(51) Int. Cl.: B60L 53/12, B60L 53/14

(54) **MULTIMODAL CHARGING OF A LOAD**
MULTIMODALES LADEN EINER LAST
CHARGE MULTIMODALE D'UNE CHARGE

(30) Priority: 16.11.2018 NL 2022009
(43) Date of publication of application: 22.09.2021
(73) Proprietor: Prodrive Technologies Innovation Services B.V., 5692 EM Son en Breugel (NL)
(72) Inventor: VAN DE MEUGHEUVEL, Niels, 5642AN Eindhoven (NL); EVERTS, Jordi, 2360 Oud-Turnhout (BE)
(74) Representative: AWA Benelux
(86) International application number: PCT/EP2019/081425
(87) International publication number: WO 2020/099612

(56) References cited:
- EP-A1- 2 717 414
- EP-A1- 2 783 897
- JP-A- 2010 213 535

## Description

### Technical field

The present invention is related to electric charging of a load, such as a battery, in particular automotive batteries.

### Background art

The conventional way to charge a battery is through cable connection to a power supply. As the battery needs DC current, and most power supplies, such as the electric grid, are AC, a conversion from AC to DC is required. Furthermore, in order to be able to control the voltage levels and/or impedance, it is known to arrange a DC/DC converter between the power supply and the battery. Therefore, a known type of wired (or cable) charging system for batteries comprises an AC/DC converter (e.g. a power factor corrector) followed by a DC/DC converter which is then connected to the battery. The DC/DC converter typically comprises a transformer which provides a galvanic isolation for safety reasons. The transformer outputs a high-frequency (e.g., 85 kHz) AC voltage/power which is rectified using an AC/DC converter (output rectifier) as output stage of the DC/DC converter.

It is also known to wirelessly charge batteries through inductive coupling of remotely arranged coils. At the power transmission side, a transmission coil is connected to the power supply. At the power reception side, the reception coil is connected to the battery. Also in this case, the reception coil will deliver a high-frequency (e.g., 85 kHz) AC voltage/power, which needs to be converted to DC using an AC/DC converter (output rectifier), for charging the battery.

US 2017/0072807 describes a dual source charging system for an electric vehicle, comprising a wireless power receiving device which receives high-frequency AC power in a non-contact state and a wired power receiving device connected to an external low-frequency AC power source. On board the vehicle, the wired power receiving device comprises a transformer for providing galvanic isolation. The wireless power receiving device comprises a secondary inductive coil for receiving power in a non-contact way. The secondary inductive coil and the transformer are connected to a rectifier through a switch which switches electric power in such a way that the electric power of either one of the electric power receiving devices is output to the rectifier. The rectifier is connected to an electric power converter which in turn is connected to the vehicle battery.

US 2014/0340027 describes in relation to Figs. 16-18 another dual source charging apparatus for an electric vehicle. The power received through the wired connection and the power received through the wireless connection are supplied to a rectifier and filter block, followed by a PFC block and then supplied to the battery. The rectifier and filter block therefore receives two distinct AC voltages, which must be rectified separately. The rectifier and filter block must therefore either include two distinct rectifiers, one for each type of connection (wired/wireless), or the AC signals from the wired and wireless connections must be coupled to the rectifier through a switch through which the two signals are sequentially coupled to the rectifier, as is the case in US 2017/0072807.

In the above systems, there is a multiplication of same devices that are arranged in the wired path and in the wireless path at the on-board side, which is costly and increases vehicle weight. In addition, in most cases, it is not possible to use the two power paths simultaneously and/or a high amount of energy conversions take place for each power path, which reduces the system's energy efficiency.

### Summary of the invention

There is hence a need in the art to provide more cost-efficient and energy-efficient solutions implementing dual source charging systems, i.e., comprising both a wired and a wireless charging device.

The present invention therefore provides a dual source charging assembly, such as for an electric vehicle, as set out in the appended claims. The assembly comprises both a wired charging device and a wireless (or contactless) charging device at the on-board side, which advantageously are operably coupled to a shared output rectifier.

The output rectifier forms part of a DC/DC converter. The DC/DC converter typically comprises a DC/AC converter (inverter), a transformer and an AC/DC converter (i.e., the output rectifier). According to the present invention, the transformer comprises a multi-port primary side including at least a first primary port and a second primary port. Each of the first primary port and the second primary port comprise a respective coil coupled to a respective pair of connection terminals. Hence, both the inverter of the wired path and the reception coil of the wireless path are coupled to the primary side of the transformer, i.e., respectively to the (connection terminals of the) first and second primary ports. The secondary side of the transformer comprises a third coil and is connected to the output rectifier. Doing so, only one output rectifier is required to support both wired and wireless charging. In addition, the wired and wireless paths can be used simultaneously for charging the load (battery) and the amount of energy conversions, e.g. between AC and DC, taking place in each path can be minimized.

According to the invention, there is therefore provided an assembly for charging a load, comprising a cable charging device, a contactless charging device, and a DC/DC converter. The cable charging device comprises a connector interface for wired connection to a mains supply. The contactless charging device comprises an inductive power receiving coil. The DC/DC converter comprises an isolating transformer and an output rectifier configured for coupling to the load. The transformer comprises a first side and a second side, the second side being coupled to the output rectifier. The first side comprises a first port and a second port. The first port and the second port are inductively coupled to the second side, the cable charging device is coupled to the first port and the contactless charging device is coupled to the second port.

In one aspect, the inductive power receiving coil is coupled to the second port through an AC current carrying cable. In other words, the transformer comprises a first coil coupled to the first port, a second coil coupled to the second port and a third coil coupled to a third port, the third port arranged at the second side. The first coil, the second coil and the third coil are advantageously distinct and are inductively coupled to one another through a closed transformer core, e.g. forming a closed loop. The inductive power receiving coil is hence connected by wire to the third coil.

### Brief description of the figures

Aspects of the invention will now be described in more detail with reference to the appended drawings, wherein same reference numerals illustrate same features and wherein:
Figure 1 represents a block scheme of a dual source charging system according to aspects of the present invention;
Figure 2 represents a block scheme of a three-phase PFC rectifier for use in the dual source charging system of Fig. 1;
Figure 3 represents a block scheme of an inverter bridge for use in the dual source charging system of Fig. 1;
Figure 4 represents a block scheme of a rectifier bridge for use in the dual source charging system of Fig. 1;
Figure 5 represents a vehicle comprising a dual source charging system according to aspects of the present invention.

### Description of embodiments

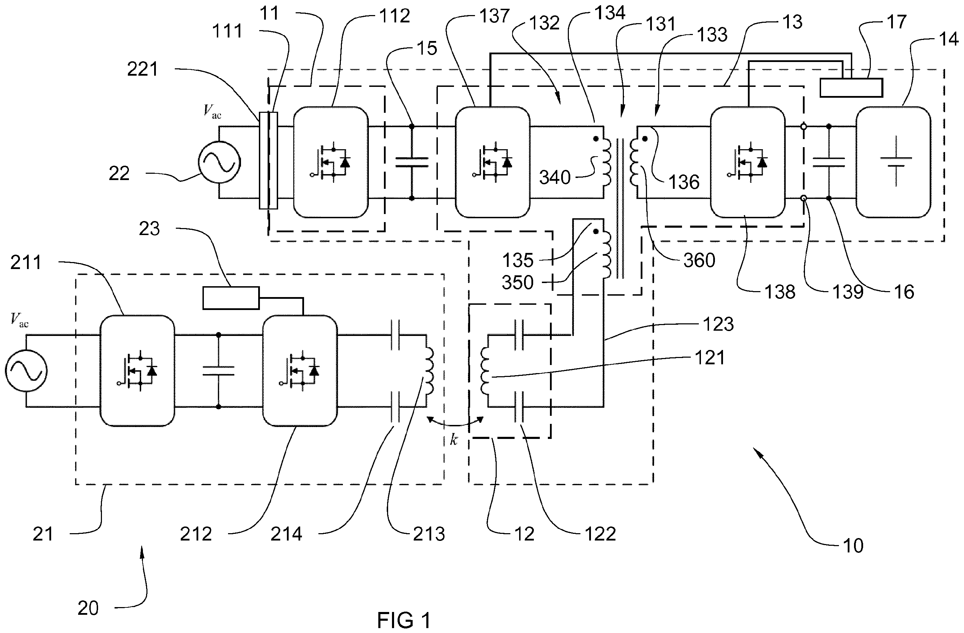

Referring to Fig. 1, a dual source charging assembly 10 is completely contained at an on-board side, e.g. a vehicle side. The charging assembly 10 interfaces with an off-board side 20, which hosts a ground unit 21 for contactless (wireless) inductive power transmission and a mains supply 22 for wired power transfer. The ground unit 21 can be made as known in the art. By way of example, the ground unit 21 can comprise an input rectifier 211, in particular comprising Power Factor Correction (PFC), followed by an inverter 212. The inverter is configured to provide a high frequency signal to an inductive power transfer coil 213. The inductive power transfer coil 213 is advantageously arranged in a resonant circuit, including one or more capacitors 214, for contactless transmission of electric power.

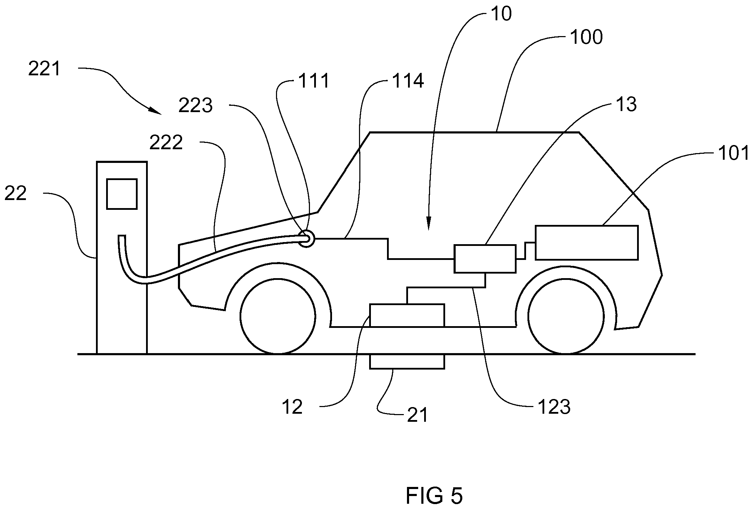

The mains supply 22 can comprise a cable connecting interface 221 for connection to the charging assembly 10. Referring to Fig. 5, the cable connecting interface 221 can e.g. comprise a cable 222 and connector plug 223 for connecting to a connector socket 111 arranged at the on-board side. The cable connecting interface can be configured as a three phase voltage interface.

It will be convenient to note that the mains supply 22 and the ground unit 21 may not be present simultaneously at a charging site.

Referring again to Fig. 1, the charging assembly 10 comprises a cable charging device 11, a contactless charging device 12 and a DC/DC converter 13 which is coupled to a load 14, e.g. a battery of an electric vehicle. According to aspects of the present invention, both the cable charging device 11 and the contactless charging device 12 are coupled to the DC/DC converter 13 in a manner as described below.

The cable charging device 11 comprises the connector socket 111 that is configured to interface with the cable connecting interface 221 at the off-board side. It can further comprise a rectifier 112, in particular comprising Power Factor Correction (PFC). Rectifier 112 is hence advantageously an active rectifier, in that it is configured both to rectify and to bring the voltage and current in phase (PFC). Rectifier 112 is coupled to the DC/DC converter 13.

The contactless charging device 12 comprises an inductive power receiving coil 121 that can be arranged in a resonant circuit, with one or more capacitors 122. The power receiving coil 121 is coupled to the DC/DC converter 13, advantageously through an AC cable 123. During wireless charging, inductive power receiving coil 121 is configured to be inductively coupled to the inductive power transfer coil 213.

The DC/DC converter 13 comprises an isolating transformer 131 having a primary side 132 and a secondary side 133. According to aspects of the invention, the transformer 131 of the DC/DC converter is a multi-port transformer comprising three ports 134, 135 and 136, each port being coupled to a separate respective coil 340, 350, 360 of the transformer 131. Transformer 131 can be seen as having a primary side 132 comprising two primary ports: a first port 134, and a second port 135. Each port has a distinct pair of connection terminals. The first port 134, and hence coil 340, is coupled to the cable charging device 11 and the second port 135, and hence coil 350, is connected to the contactless charging device 12. The three coils 340, 350 and 360 of transformer 131 are advantageously magnetically coupled through a core forming a closed loop between the coils.

The DC/DC converter 13 further comprises an inverter 137 connected to the first port 134. The inverter 137 of the DC/DC converter 13 is connected to the cable charging device 11, in particular to the rectifier 112. A filter 15 may be connected between rectifier 112 and inverter 137.

The second port 135, and hence coil 350, is advantageously directly coupled to the inductive power receiving coil 121. In particular, the inductive power receiving coil 121 is connected to the second port 135 via the AC cable 123, advantageously without passing through any AC/DC or DC/AC conversion stages. Advantageously, the inductive power receiving coil 121 is connected to the second port 135 via the AC cable 123 without passing through any AC/AC conversion stages.

The third port 136 of transformer 131 can be seen as forming a secondary side 133. The third port 136 is coupled to a respective coil 360 of transformer 131, which is advantageously distinct from the coils 340 and 350 coupled to the first and second ports 134, 135 respectively. Both first and second ports 134, 135 are inductively coupled to the third port 136 (through coils 340-350-360), and both first and second ports 134, 135 are advantageously inductively coupled to each other. Transformer 131 can therefore be a three-port transformer.

The DC/DC converter 13 can further comprise a (output) rectifier 138 coupled between the secondary port 136 and an output 139 which can be coupled to the load 14. An output filter 16 can be connected between output 139 and the load 14.

One advantage of the above configuration is that the cable charging device and the contactless charging device may operate simultaneously. Another advantage is that the output rectifier 138 of the DC/DC converter is shared between the cable charging device and the contactless charging device, saving costs and weight.

Advantageously, the winding ratio between the coils 340, 350 and 360 of transformer 131 can be selected such that an optimal output impedance of the contactless charging device is obtained. This allows for minimizing the reactive circulating currents and hence for maximizing efficiency.

Referring to Fig. 5, the contactless charging device 12 and the cable charging device 11 can still be maintained as separate devices (e.g. supplied by different OEM manufacturers) within a vehicle 100 and can be connected to the DC/DC converter 13 by cables 123, 114 respectively. Alternatively, the rectifier 112 of cable charging device 11 can be provided adjacent to the DC/DC converter 13 and cable 114 can be an AC current carrying cable connecting the rectifier 112 to the connector interface 111. This increases freedom to design the three components separately, and to arrange them spaced apart in the vehicle 100.

Since the contactless charging device 12 typically needs to be placed at the bottom of the vehicle, the available space at that location in the vehicle 100 is limited. Therefore mounting the DC/DC converter 13 remotely, e.g. proximate to the load, such as battery 101, e.g. configured to provide power for driving the vehicle 100, may be advantageous.

With the above configuration, control is made simple. An on-board controller 17 is operably coupled to the DC/DC converter 13. An off-board controller 23 is coupled to the inverter 212. The off-board controller may control the wireless charging between transmission coil 213 and receiving coil 121 and can be configured to receive a setpoint such as a current setpoint through wireless data communication (not shown) output from the controller 17. Off-board 23 controller may then be configured to adapt an operating point of the inverter 212 based on the setpoint. On-board controller 17 may be configured to adapt an operating point of the DC/DC converter 13 based on the setpoint that is generated. The three-port transformer 131 makes it possible to control the DC/DC converter and possibly the inverter 212 such that power through the three-port transformer 131 can flow in any direction.

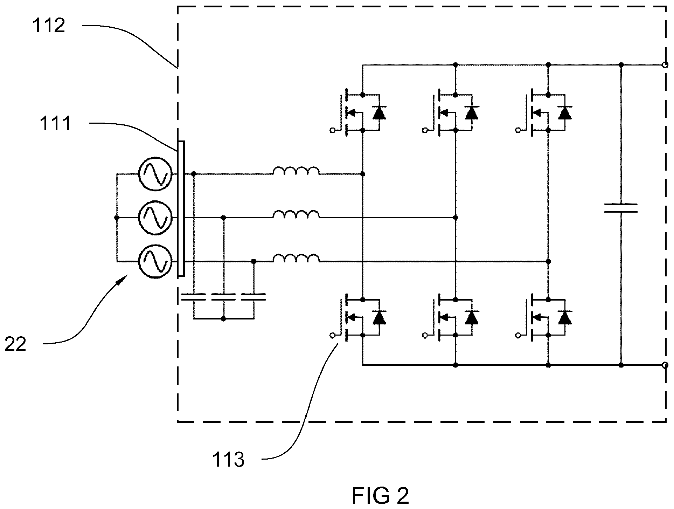

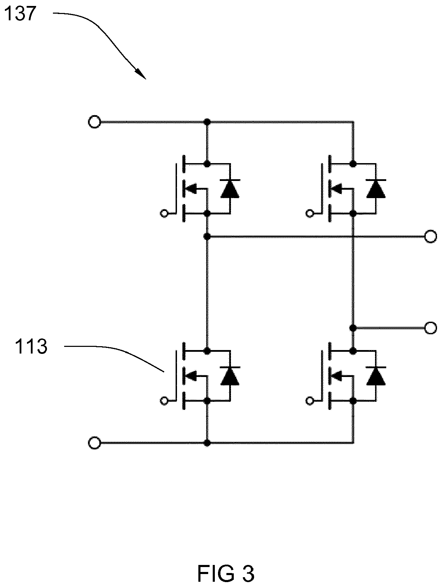

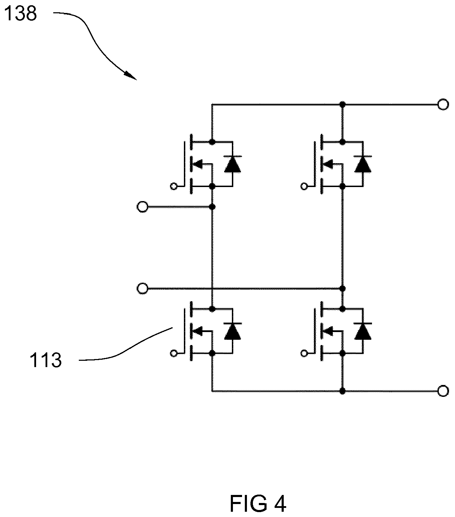

Fig. 2 represents a possible embodiment of a rectifier with PFC, as may be used for rectifier 112 or 211. The rectifier shown in Fig. 2 is advantageously a three-phase rectifier comprising three bridge legs, advantageously with actively switchable semiconductor switches 113 that may be operated through a pulse width modulation scheme. Fig. 3 represents a possible embodiment of an inverter bridge, e.g. as may be used for the inverter 137 of DC/DC converter 13. Fig. 4 represents a possible embodiment of a rectifier bridge, e.g. as may be used for the output rectifier 138 of DC/DC converter 13. Either one or both the inverter bridge and the rectifier bridge may be formed as a bridge having actively switchable semiconductor switches 113 that may be operated through suitable pulse width modulation schemes. These bridge circuits advantageously allow for bidirectional power transfer.

It will be convenient to note that while aspects of the invention have been described herein in relation to battery operated vehicles, the invention is not limited to such field of application, and dual charging assemblies according to the invention may find application in other devices as well, in particular battery operated household appliances.

## Claims

1. Assembly (10) for charging a load (14), comprising:
a cable charging device (11), comprising a connector interface (111) for wired connection to a mains supply (22),
a contactless charging device (12), comprising an inductive power receiving coil (121), and
a DC/DC converter (13) comprising an isolating transformer (131) and an output rectifier (138) configured for coupling to the load, wherein the transformer comprises a first side (132) and a second side (133), the second side being coupled to the output rectifier (138),
wherein the first side (132) comprises a first port (134) and a second port (135), wherein the first port and the second port are inductively coupled to the second side (133), wherein the cable charging device (11) is coupled to the first port (134) and wherein the contactless charging device (12) is coupled to the second port (135),
**characterised in that** the inductive power receiving coil (121) is coupled to the second port (135) through an AC current carrying cable (123).

2. Assembly of claim 1, wherein the cable charging device (11) comprises a first rectifier (112) coupled between the connector interface (111) and the first port (134).

3. Assembly of claim 1 or 2, wherein the DC/DC converter (13) comprises a first inverter (137) coupled between the connector interface (111) and the first port (134).

4. Assembly of any one of the preceding claims, wherein the transformer (131) comprises a first coil (340) coupled to the first port (134), a second coil (350) coupled to the second port (135) and a third coil (360) coupled to a third port (136), the third port arranged at the second side (133), wherein the first coil, the second coil and the third coil are distinct and inductively coupled to one another.

5. Assembly of any one of the preceding claims, comprising a control unit (17) operably coupled to the DC/DC converter (13), wherein the control unit is operable to determine a setpoint, and to adjust an operation of the DC/DC converter on the basis of the setpoint.

6. Assembly of claim 5, wherein the control unit (17) is operably coupled to adjust an operating point of the output rectifier (138).

7. Assembly of any one of the preceding claims, wherein the output rectifier (138) is configured for allowing bidirectional power flow between the first side (132) and the second side (133).

8. Assembly of claim 5 or 6 in conjunction with claim 7, wherein the control unit (17) is configured to control operation of the output rectifier (138) to allow for bidirectional power flow through the isolating transformer (131).

9. Assembly of any one of the preceding claims, wherein an AC/DC converter is absent between the inductive power receiving coil (121) and the second port (135).

10. Assembly of any one of the preceding claims, wherein the contactless charging device (12) comprises a capacitor (122) coupled to the inductive power receiving coil (121), the capacitor and the inductive power receiving coil forming a resonant tank.

11. Vehicle (100), comprising the assembly (10) of any one of the preceding claims and a battery (101), the battery being the load (14).

12. Power transfer system, comprising the assembly (10) of any one of the claims 1 to 10, and an off-board side (20), wherein the off-board side comprises one or both of: the mains supply (22) configured for wired connection to the connector interface (111), and a ground unit (21) comprising an inductive power transfer coil (213) configured for power transfer with the inductive power receiving coil (121).

## Patentansprüche

1. Anordnung (10) zum Laden einer Last (14), umfassend:
eine Kabelladevorrichtung (11), die eine Anschlussschnittstelle (111) für den drahtgebundenen Anschluss an eine Netzstromversorgung (22) umfasst,
eine kontaktlose Ladevorrichtung (12), die eine Induktionsenergie aufnehmende Spule (121) umfasst, und
einen DC/DC-Wandler (13), der einen isolierenden Transformator (131) und einen Ausgangsgleichrichter (138), gestaltet zum Koppeln mit der Last, umfasst, wobei der Transformator eine erste Seite (132) und eine zweite Seite (133) umfasst, wobei die zweite Seite mit dem Ausgangsgleichrichter (138) gekoppelt ist,
wobei die erste Seite (132) einen ersten Port (134) und einen zweiten Port (135) umfasst, wobei der erste Port und der zweite Port induktiv mit der zweiten Seite (133) gekoppelt sind, wobei die Kabelladevorrichtung (11) mit dem ersten Port (134) gekoppelt ist und wobei die kontaktlose Ladevorrichtung (12) mit dem zweiten Port (135) gekoppelt ist,
**dadurch gekennzeichnet, dass** die Induktionsenergie aufnehmenden Spule (121) über ein Wechselstrom führendes Kabel (123) mit dem zweiten Port (135) gekoppelt ist.

2. Anordnung nach Anspruch 1, wobei die Kabelladevorrichtung (11) einen ersten Gleichrichter (112) umfasst, der zwischen die Anschlussschnittstelle (111) und den ersten Port (134) gekoppelt ist.

3. Anordnung nach Anspruch 1 oder 2, wobei der DC/DC-Wandler (13) einen ersten Umrichter (137) umfasst, der zwischen die Anschlussschnittstelle (111) und den ersten Port (134) gekoppelt ist.

4. Anordnung nach irgendeinem der vorhergehenden Ansprüche, wobei der Transformator (131) eine erste Spule (340), die mit dem ersten Port (134) gekoppelt ist, eine zweite Spule (350), die mit dem zweiten Port (135) gekoppelt ist, und eine dritte Spule (360), die mit einem dritten Port (136) gekoppelt ist, umfasst, wobei der dritte Port auf der zweiten Seite (133) angeordnet ist, wobei die erste Spule, die zweite Spule und die dritte Spule voneinander verschieden und induktiv miteinander gekoppelt sind.

5. Anordnung nach irgendeinem der vorhergehenden Ansprüche, eine funktionsmäßig mit dem DC/DC-Wandler (13) gekoppelte Steuereinheit (17) umfassend, wobei die Steuereinheit dazu dient, einen Sollwert zu bestimmen und einen Betrieb des DC/DC-Wandlers auf der Basis des Sollwerts zu justieren.

6. Anordnung nach Anspruch 5, wobei die Steuereinheit (17) funktionsmäßig gekoppelt ist, um einen Betriebspunkt des Ausgangsgleichrichters (138) zu justieren.

7. Anordnung nach irgendeinem der vorhergehenden Ansprüche, wobei der Ausgangsgleichrichter (138) dafür konfiguriert ist, einen bidirektionalen Energiefluss zwischen der ersten Seite (132) und der zweiten Seite (133) zu ermöglichen.

8. Anordnung nach Anspruch 5 oder 6 in Verbindung mit Anspruch 7, wobei die Steuereinheit (17) dafür konfiguriert ist, den Betrieb des Ausgangsgleichrichters (138) zu steuern, um einen bidirektionalen Energiefluss durch den isolierenden Transformator (131) zu ermöglichen.

9. Anordnung nach irgendeinem der vorhergehenden Ansprüche, wobei kein AC/DC-Wandler zwischen der Induktionsenergie aufnehmenden Spule (121) und dem zweiten Port (135) vorhanden ist.

10. Anordnung nach irgendeinem der vorhergehenden Ansprüche, wobei die kontaktlose Ladevorrichtung (12) einen Kondensator (122) umfasst, der mit der Induktionsenergie aufnehmenden Spule (121) gekoppelt ist, wobei der Kondensator und die Induktionsenergie aufnehmenden Spule (121) einen Schwingkreis bilden.

11. Fahrzeug (100), die Anordnung (10) nach irgendeinem der vorhergehenden Ansprüche und eine Batterie (101) umfassend, wobei die Batterie die Last (14) ist.

12. Energieübertragungssystem, die Anordnung (10) nach irgendeinem der Ansprüche 1 bis 10 und eine Offboard-Seite (20) umfassend, wobei die Offboard-Seite eines oder beides von Folgendem umfasst: der Netzstromversorgung (22), die für den an die Anschlussschnittstelle (111) drahtgebundenen Anschluss gestaltet ist, und eine Bodeneinheit (21), die eine Spule zur induktiven Energieübertragung (213) umfasst, die zur Energieübertragung mit der Induktionsenergie aufnehmenden Spule (121) gestaltet ist.

## Revendications

1. Ensemble (10) pour charger une charge (14), comprenant :
un dispositif de charge par câble (11), comprenant une interface connecteur (111) pour une connexion filaire à une alimentation de secteur (22),
un dispositif de charge sans contact (12), comprenant une bobine de réception d'énergie inductive (121), et
un convertisseur CC/CC (13) comprenant un transformateur d'isolation (131) et un redresseur de sortie (138) configuré pour se coupler à la charge, dans lequel le transformateur comprend un premier côté (132) et un second côté (133), le second côté étant couplé au redresseur de sortie (138),
dans lequel le premier côté (132) comprend un premier port (134) et un deuxième port (135), dans lequel le premier port et le deuxième port sont couplés de manière inductive au second côté (133), dans lequel le dispositif de charge par câble (11) est couplé au premier port (134) et dans lequel le dispositif de charge sans contact (12) est couplé au deuxième port (135),
**caractérisé en ce que** la bobine de réception d'énergie inductive (121) est couplée au deuxième port (135) par l'intermédiaire d'un câble porteur de courant alternatif (123).

2. Ensemble selon la revendication 1, dans lequel le dispositif de charge par câble (11) comprend un premier redresseur (112) couplé entre l'interface connecteur (111) et le premier port (134).

3. Ensemble selon la revendication 1 ou 2, dans lequel le convertisseur CC/CC (13) comprend un premier onduleur (137) couplé entre l'interface connecteur (111) et le premier port (134).

4. Ensemble selon l'une quelconque des revendications précédentes, dans lequel le transformateur (131) comprend une première bobine (340) couplée au premier port (134), une deuxième bobine (350) couplée au deuxième port (135) et une troisième bobine (360) couplée à un troisième port (136), le troisième port étant agencé sur le second côté (133), dans lequel la première bobine, la deuxième bobine et la troisième bobine sont distinctes et couplées de manière inductive les unes aux autres.

5. Ensemble selon l'une quelconque des revendications précédentes, comprenant une unité de commande (17) couplée de manière fonctionnelle au convertisseur CC/CC (13), dans lequel l'unité de commande est apte à fonctionner pour déterminer un point de consigne et ajuster un fonctionnement du convertisseur CC/CC sur la base du point de consigne.

6. Ensemble selon la revendication 5, dans lequel l'unité de commande (17) est couplée de manière fonctionnelle pour ajuster un point de fonctionnement du redresseur de sortie (138).

7. Ensemble selon l'une quelconque des revendications précédentes, dans lequel le redresseur de sortie (138) est configuré pour permettre un flux d'énergie bidirectionnel entre le premier côté (132) et le second côté (133).

8. Ensemble selon la revendication 5 ou 6 en liaison avec la revendication 7, dans lequel l'unité de commande (17) est configurée pour commander le fonctionnement du redresseur de sortie (138) pour permettre un flux d'énergie bidirectionnel à travers le transformateur d'isolation (131).

9. Ensemble selon l'une quelconque des revendications précédentes, dans lequel un convertisseur CA/CC est absent entre la bobine de réception d'énergie inductive (121) et le deuxième port (135).

10. Ensemble selon l'une quelconque des revendications précédentes, dans lequel le dispositif de charge sans contact (12) comprend un condensateur (122) couplé à la bobine de réception d'énergie inductive (121), le condensateur et la bobine de réception d'énergie inductive formant un circuit résonant.

11. Véhicule (100), comprenant l'ensemble (10) selon l'une quelconque des revendications précédentes et une batterie (101), la batterie étant la charge (14).

12. Système de transfert d'énergie, comprenant l'ensemble (10) selon l'une quelconque des revendications 1 à 10, et un côté non embarqué (20), dans lequel le côté non embarqué comprend l'un ou les deux parmi : l'alimentation de secteur (22) configurée pour une connexion filaire à l'interface connecteur (111), et une base (21) comprenant une bobine de transfert d'énergie inductive (213) configurée pour un transfert d'énergie avec la bobine de réception d'énergie inductive (121).
